# EUROPEAN PATENT APPLICATION

(11) **EP 4 596 400 A1**
(43) Date of publication of application: **06.08.2025**
(21) Application number: 22965548.5
(22) Date of filing: 18.11.2022
(51) Int. Cl.: B64C 27/14

(54) **PANORAMIC DRONE**

(71) Applicant: Arashi Vision Inc., Shenzhen, Guangdong 518000 (CN)
(72) Inventor: ZHANG, Guilin, Shenzhen, Guangdong 518000 (CN); GAO, Fei, Shenzhen, Guangdong 518000 (CN)
(74) Representative: Michalski Hüttermann & Partner Patentanwälte mbB
(86) International application number: PCT/CN2022/132743
(87) International publication number: WO 2024/103367

(57) **Abstract**

A panoramic unmanned aerial vehicle (UAV) includes a body including a side shell, a first fisheye lens having a first field of view region and a first stitching region not exceeding the range of the first field of view region, a second fisheye lens having a second field of view region and a second stitching region not exceeding the range of the second field of view region, a rear arm, and a front arm. The second field of view region intersects with the first field of view region to form an overlapping area and a field of view blind area. A region not covered by either the first stitching region or the second stitching region forms a stitching blind area. The rear arm includes a first propeller and a first driving component configured to drive the first propeller to rotate. The front arm includes a second propeller and a second driving component configured to drive the second propeller to rotate. Both the rear arm and the front arm are located in the stitching blind area. A plane passing through the central line of the first fisheye lens and perpendicular to a horizontal plane is defined as a reference plane, and a projection of an axis of the first driving component on the reference plane intersects with a projection of an axis of the second driving component on the reference plane below the bottom shell and between the first driving component and the second driving component.

## Description

### Technical Field

The present disclosure relates to unmanned aerial vehicles (UAVs), and more particularly, to a panoramic UAV.

### Background

UAVs capture video using lenses mounted on the body. To obtain panoramic images or videos, lenses are not only installed on the bottom or sides of the body but also on the top of the body. By allowing the field of view angles of multiple lenses to intersect and form a closed space, panoramic shooting of the scenery outside the closed space can be achieved. However, in practice, the propellers often partially occupy the field of view range corresponding to the lens on the top of the body, thereby obstructing part of the field of view. Consequently, the actual shooting range of the UAV is smaller than the field of view range formed by the field of view angles of the lenses due to the obstruction caused by the propellers.

### Summary

According to some implementations, a panoramic UAV is provided in which the propellers do not obstruct the field of view range.

A panoramic UAV includes:
a body, including a top shell, a bottom shell, and a side shell connected between the top shell and the bottom shell;
a first fisheye lens, provided on the top shell, the first fisheye lens having a first field of view region and a first stitching region not exceeding the range of the first field of view region;
a second fisheye lens, provided on the bottom shell, the second fisheye lens having a second field of view region and a second stitching region not exceeding the range of the second field of view region, the second field of view region intersecting with the first field of view region to form an overlapping area and a field of view blind area, and a region not covered by either the first stitching region or the second stitching region forming a stitching blind area;
a rear arm, provided on the side shell, the rear arm including a first propeller and a first driving component configured to drive the first propeller to rotate; and
a front arm, provided on the side shell, the front arm including a second propeller and a second driving component configured to drive the second propeller to rotate,
where both the rear arm and the front arm are located in the stitching blind area, and a plane passing through the central line of the first fisheye lens and perpendicular to a horizontal plane is defined as a reference plane, and a projection of an axis of the first driving component on the reference plane intersects with a projection of an axis of the second driving component on the reference plane below the bottom shell and between the first driving component and the second driving component.

The first field of view region of the first fisheye lens and the second field of view region of the second fisheye lens intersect, enabling panoramic shooting. Additionally, since the rear arm and the front arm are both located in the stitching blind area, and the projection of the axis of the first driving component on the reference plane intersects with the projection of the axis of the second driving component on the reference plane below the bottom shell and between the first driving component and the second driving component, this means that the axes of the first and second driving components extend outwardly inclined toward the bottom shell. As a result, since the first propeller and the second propeller are driven by the first and second driving components, respectively, the first propeller and the second propeller are arranged outwardly inclined relative to the bottom shell, effectively preventing the field of view range from being obstructed by the propellers.

In one implementation, an angle formed between the axis of the first driving component and the vertical direction is 0° to 20°, and an angle formed between the axis of the second driving component and the vertical direction is 0° to 20°.

In one implementation, the side shell includes opposite first and second side shells, the rear arm includes a left rear arm and a right rear arm respectively connected to the first side shell and the second side shell, and the front arm includes a left front arm and a right front arm respectively connected to the first side shell and the second side shell.

In one implementation, the second driving component of the left front arm drives the second propeller to rotate counterclockwise, the second driving component of the right front arm drives the second propeller to rotate clockwise, the first driving component of the left rear arm drives the first propeller to rotate clockwise, and the first driving component of the right rear arm drives the first propeller to rotate counterclockwise.

In one implementation, the side shell further includes a first connecting shell and a second connecting shell, the first connecting shell and the second connecting shell connecting two ends of the first side shell and the second side shell, and the first fisheye lens is positioned close to the first connecting shell.

In one implementation, the top shell includes a first top shell part and a second top shell part connected to the first top shell part, the first fisheye lens protrudes from the first top shell part, and the second top shell part extends obliquely from one end of the first top shell part toward the bottom shell.

In one implementation, in a vertical direction, the left front arm and the right front arm are closer to the first fisheye lens than the left rear arm and the right rear arm.

In one implementation, the rear arm includes a first rotating arm rotatably connected to the side shell, the first driving component is provided at an end of the first rotating arm, the front arm includes a second rotating arm rotatably connected to the side shell, the second driving component is provided at an end of the second rotating arm, and the first rotating arm and the second rotating arm rotate toward each other and toward their respective side shells.

In one implementation, the rear arm includes a first rotating arm rotatably connected to the side shell, the first rotating arm includes an inclined surface facing the first driving component, the first driving component is securely arranged on the inclined surface, a plane where the first propeller is located is parallel to the inclined surface and perpendicular to the axis of the first driving component, and a side of the first driving component closer to the first fisheye lens is higher than a side of the first driving component further from the first fisheye lens.

In one implementation, the bottom shell includes a first bottom shell part and a second bottom shell part, the second bottom shell part extends obliquely from one end of the first bottom shell part toward the top shell, and the second fisheye lens protrudes from the second bottom shell part.

In one implementation, the bottom shell is provided with a supporting part, a surface of the supporting part away from the top shell is a supporting surface, and the second fisheye lens is located completely between the top shell and a plane where the supporting surface is located.

In one implementation, the front arm and the rear arm have an unfolded mode, a surface of the rear arm at an end away from the top shell is a grounding surface, and in the unfolded mode, the grounding surface is coplanar with the supporting surface of the supporting part.

In one implementation, upper ends of the central line of the first fisheye lens and the central line of the second fisheye lens are inclined toward the rear arm.

In one implementation, the central line of the first fisheye lens coincides with the central line of the second fisheye lens.

In one implementation, angles formed between the central line of the first fisheye lens and the vertical direction and between the central line of the second fisheye lens and the vertical direction are both less than 20°.

A panoramic UAV includes: a body including a side shell, the side shell including opposite first and second side shells; a rear arm including a left rear arm and a right rear arm respectively connected to the first side shell and the second side shell, each rear arm including a first propeller and a first driving component configured to drive the first propeller to rotate, the first driving component of the left rear arm driving the first propeller to rotate clockwise, and the first driving component of the right rear arm driving the first propeller to rotate counterclockwise; and a front arm including a left front arm and a right front arm respectively connected to the first side shell and the second side shell, each front arm including a second propeller and a second driving component configured to drive the second propeller to rotate, the second driving component of the left front arm driving the second propeller to rotate counterclockwise, and the second driving component of the right front arm driving the second propeller to rotate clockwise.

During flight of the panoramic UAV, lift is generated by the counterclockwise rotation of the left front second propeller, the clockwise rotation of the right front second propeller, the clockwise rotation of the left rear first propeller, and the counterclockwise rotation of the right rear first propeller, enabling the panoramic UAV to take off and fly.

In one implementation, the body further includes a top shell and a bottom shell, the side shell connects the top shell and the bottom shell, and the left front arm and the right front arm are closer to the top shell than the left rear arm and the right rear arm.

In one implementation, the body further includes a top shell and a bottom shell, the side shell is connected between the top shell and the bottom shell, and the panoramic UAV further includes a first fisheye lens provided on the top shell and a second fisheye lens provided on the bottom shell. The first fisheye lens includes a first field of view region, and the second fisheye lens includes a second field of view region. The second field of view region intersects with the first field of view region to form an overlapping area and a field of view blind area, and both the rear arm and the front arm are located in the field of view blind area. A plane passing through the central line of the first fisheye lens and perpendicular to a horizontal plane is defined as a reference plane, and a projection of an axis of the first driving component on the reference plane intersects with a projection of an axis of the second driving component on the reference plane below the bottom shell and between the first driving component and the second driving component.

In one implementation, an angle formed between the axis of the first driving component and the vertical direction is 0° to 20°, and an angle formed between the axis of the second driving component and the vertical direction is 0° to 20°.

In one implementation, the rear arm includes a first rotating arm rotatably connected to the side shell, the first rotating arm includes an inclined surface facing the first driving component, the first driving component is securely arranged on the inclined surface, a plane where the first propeller is located is parallel to the inclined surface and perpendicular to the axis of the first driving component, and a side of the first driving component closer to the second driving component is higher than a side of the first driving component further from the second driving component.

Details of one or more implementations of the present disclosure are set forth in the accompanying drawings and description below. Other features, objectives, and advantages of the present disclosure will become apparent from the description, drawings, and claims.

### Brief Description of Drawings

To more clearly illustrate the technical solutions in the implementations of the present disclosure or the related art, the drawings required for the description of the implementations or the related art will be briefly introduced below. It is evident that the drawings described below are merely examples of the present disclosure. For those skilled in the art, other drawings can be obtained based on the disclosed drawings without creative efforts.
FIG. 1 is a perspective view of a panoramic UAV according to one implementation.
FIG. 2 is another perspective view of the panoramic UAV in FIG. 1 from a different direction.
FIG. 3 is a side view of the panoramic UAV in FIG. 1.
FIG. 4 is a schematic diagram of the field of view regions and stitching regions of the fisheye lenses in FIG. 1.
FIG. 5 is a schematic diagram of the projections of the axes of the first and second driving components on the reference plane in FIG. 3.
FIG. 6 is a schematic diagram of the rear arm with the first propeller inwardly inclined in FIG. 3.
FIG. 7 is a perspective view of the panoramic UAV in FIG. 1 in a folded mode.
FIG. 8 is an enlarged view of the rear arm in FIG. 1.

### Detailed Description

The following provides a clear and complete description of the technical solutions in the implementations of the present disclosure in conjunction with the accompanying drawings. It is evident that the implementations described are merely part of the implementations of the present disclosure and not all of them. Based on the implementations of the present disclosure, all other implementations obtained by those skilled in the art without creative efforts fall within the scope of protection of the present disclosure.

In the description of the present disclosure, it should be understood that terms such as "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like indicate orientations or positional relationships based on the orientations or positional relationships shown in the drawings. These terms are merely for the convenience of describing the present disclosure and simplifying the description, rather than indicating or implying that the referenced devices or components must have specific orientations, be constructed in specific orientations, or operate in specific orientations. Therefore, they should not be construed as limitations to the present disclosure.

Furthermore, the terms "first" and "second" are used for descriptive purposes only and should not be understood as indicating or implying relative importance or implicitly specifying the number of technical features indicated. Thus, features defined as "first" and "second" may explicitly or implicitly include at least one of the features. In the description of the present disclosure, "multiple" means at least two, such as two or three, unless explicitly and specifically defined otherwise.

In the present disclosure, unless explicitly specified and defined otherwise, terms such as "mounted," "connected," "fixed," and the like should be interpreted broadly. For example, they may refer to fixed connections, detachable connections, or integral connections; they may refer to mechanical connections or electrical connections; they may refer to direct connections or indirect connections through intermediate media; or they may refer to internal communication between two components or an interaction relationship between two components. For those skilled in the art, the specific meanings of the above terms in the present disclosure can be understood based on specific circumstances.

In the present disclosure, unless explicitly specified and defined otherwise, when a first feature is "on" or "under" a second feature, it may mean that the first and second features are in direct contact, or that the first and second features are indirectly in contact through an intermediate medium. Moreover, when the first feature is "above," "over," or "on top of" the second feature, it may mean that the first feature is directly above or obliquely above the second feature, or it may simply indicate that the first feature is at a higher horizontal level than the second feature. Similarly, when the first feature is "below," "under," or "beneath" the second feature, it may mean that the first feature is directly below or obliquely below the second feature, or it may simply indicate that the first feature is at a lower horizontal level than the second feature.

It should be noted that when an element is described as being "fixed to" or "disposed on" another element, it may be directly on the other element or there may be an intervening element. When an element is described as being "connected to" another element, it may be directly connected to the other element or there may be an intervening element. The terms "vertical," "horizontal," "upper," "lower," "left," "right," and similar expressions used herein are for illustrative purposes only and do not represent the only implementation.

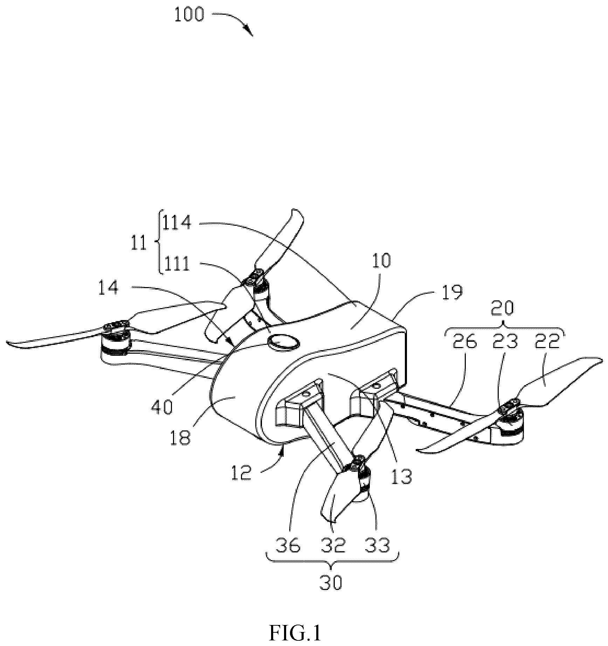

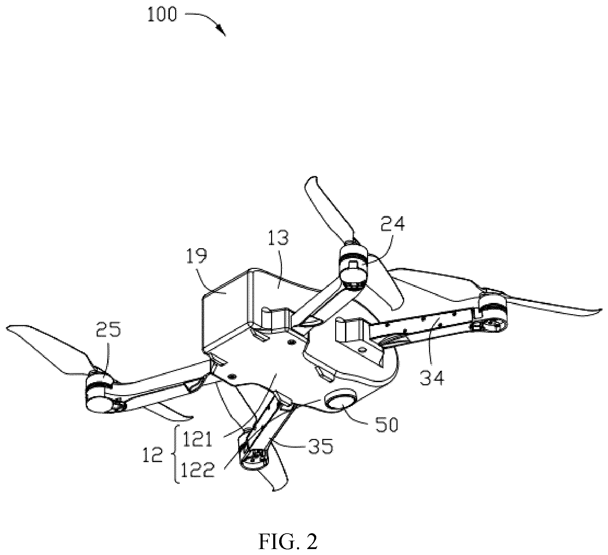

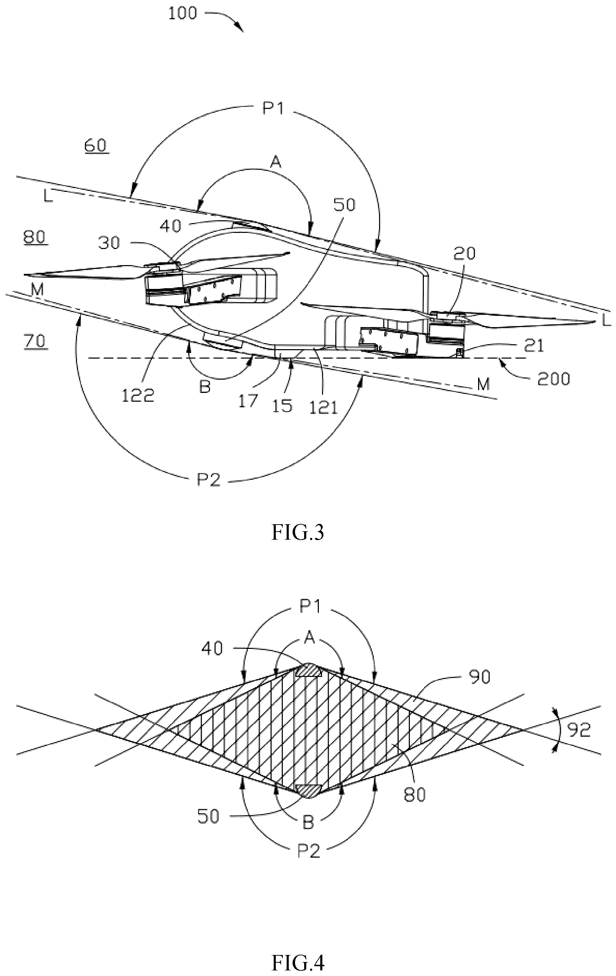

Please refer to FIGs. 1 to 5. According to one implementation of the present disclosure, a panoramic UAV 100 is provided, which includes a body 10, a rear arm 20, a front arm 30, a first fisheye lens 40, and a second fisheye lens 50. The body 10 includes a top shell 11, a bottom shell 12, and a side shell connected between the top shell 11 and the bottom shell 12. The first fisheye lens 40 is provided on the top shell 11 and includes a first field of view region 60 and a first stitching region that does not exceed the range of the first field of view region 60. The second fisheye lens 50 is provided on the bottom shell 12 and includes a second field of view region 70 and a second stitching region that does not exceed the range of the second field of view region 70. The second field of view region 70 intersects with the first field of view region 60 to form an overlapping area (not shown in the figure) and a field of view blind area 80. A region not covered by either the first stitching region or the second stitching region forms a stitching blind area 90. The overlapping area refers to the area covered by both the second field of view region 70 and the first field of view region 60. The field of view blind area 80 refers to the area not covered by either the second field of view region 70 or the first field of view region 60. Both the rear arm 20 and the front arm 30 are located in the stitching blind area 90. The rear arm 20 is provided on the side shell and includes a first propeller 22 and a first driving component 23 configured to drive the first propeller 22 to rotate. The front arm 30 is provided on the side shell and includes a second propeller 32 and a second driving component 33 configured to drive the second propeller 32 to rotate. As shown in FIG. 4, a plane passing through the central line of the first fisheye lens 40 and perpendicular to a horizontal plane is defined as a reference plane Y. The projection of the axis 24 of the first driving component 23 on the reference plane intersects with the projection of the axis 34 of the second driving component 33 on the reference plane below the bottom shell 12 and between the first driving component 23 and the second driving component 33.

The first field of view region 60 of the first fisheye lens 40 and the second field of view region 70 of the second fisheye lens 50 of the panoramic UAV 100 intersect, thereby enabling panoramic shooting. Additionally, both the rear arm 20 and the front arm 30 are located in the stitching blind area 90, and the projection of the axis 24 of the first driving component 23 on the reference plane intersects with the projection of the axis 34 of the second driving component 33 on the reference plane below the bottom shell 12 and between the first driving component 23 and the second driving component 33. Thus, this means that the axis 24 of the first driving component 23 and the axis 34 of the second driving component 33 extend outwardly inclined toward the bottom shell 12. As a result, since the first propeller 22 and the second propeller 32 are driven by the first driving component 23 and the second driving component 33, respectively, the first propeller 22 and the second propeller 32 are arranged outwardly inclined relative to the bottom shell 12. This effectively prevents the field of view range from being obstructed by the propellers.

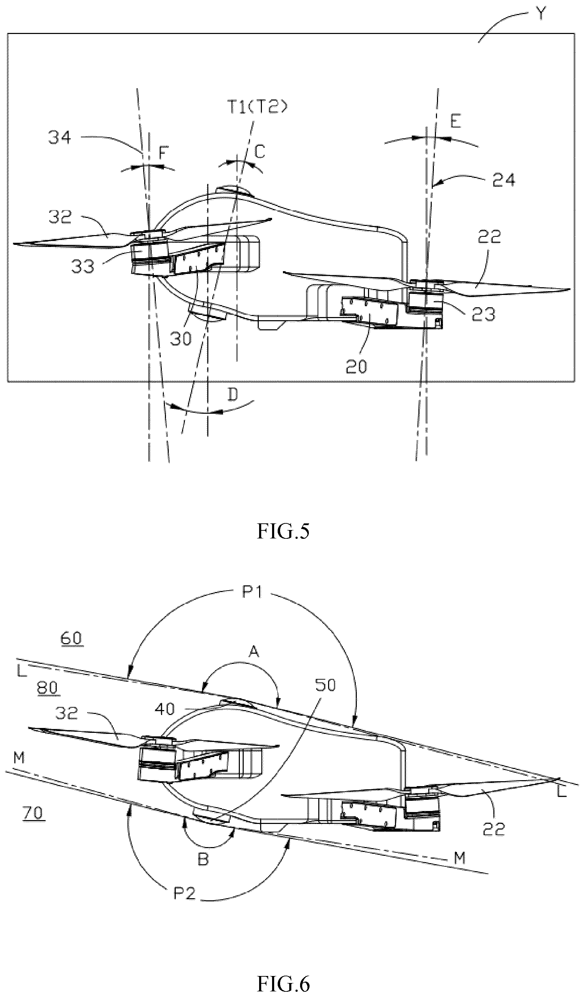

Please refer to FIGs. 3 and 6. Taking the first propeller 22 as an example, when the first propeller 22 is outwardly inclined, compared to when the first propeller 22 is horizontally arranged or inwardly inclined, the plane in which the outwardly inclined first propeller 22 is located tends to align with the viewing angle direction of the first fisheye lens 40. This avoids the propellers obstructing the first stitching region or even the first field of view region 60, ensuring that the panoramic shooting range of the panoramic UAV 100 matches the range formed by at least the first stitching region and the second stitching region, or even the range formed by the first field of view region 60 and the second field of view region 70. In other words, the panoramic shooting range of the panoramic UAV 100 covers the entire first stitching region and the entire second stitching region, or even the entire first field of view region 60 and the entire second field of view region 70.

For example, please refer to FIG. 6. The first fisheye lens 40 has a first field of view angle A and a first stitching region angle P1, where the first field of view angle A corresponds to the first field of view region 60, and the first stitching region angle P1 corresponds to the first stitching region. When the first field of view angle A and the first stitching region angle P1 of the first fisheye lens 40 provided on the top shell 11 are 200° and 190°, respectively, if the first propeller 22 is traditionally arranged horizontally or inwardly inclined, the orientation of the plane in which the first propeller 22 is located tends to differ from the viewing angle direction of the first fisheye lens 40. As a result, the end of the first propeller 22 farthest from the first fisheye lens 40 may extend into the first stitching region, thereby obstructing part of the first stitching region, i.e., part of the first field of view region 60. This reduces the actual field of view angle of the first fisheye lens 40 to less than the first stitching region angle P1, i.e., less than 190°. Consequently, the actual shooting range of the panoramic UAV 100 is smaller than the range covered by the first stitching region and the second stitching region, and also smaller than the range covered by the first field of view region 60 and the second field of view region 70.

In this implementation, as shown in FIG. 3, when the first propeller 22 is outwardly inclined, the orientation of the plane in which the first propeller 22 is located tends to align with the viewing angle direction of the first fisheye lens 40, avoiding obstruction of the first stitching region by the first propeller 22. As a result, the actual field of view angle of the first fisheye lens 40 is not less than the first stitching region angle P1, i.e., not less than 190°, and may even be the same as the first field of view angle A of the first fisheye lens 40, i.e., 200°. Thus, the actual shooting range of the panoramic UAV 100 is not less than the range covered by the first stitching region and the second stitching region, and may even match the range covered by the first field of view region 60 and the second field of view region 70.

Specifically, the side shell includes a first side shell 13, a second side shell 14, a first connecting shell 18, and a second connecting shell 19. The first side shell 13 and the second side shell 14 are opposite to each other, and the first connecting shell 18 and the second connecting shell 19 connect the two ends of the first side shell 13 and the second side shell 14. The top shell 11 includes a first top shell part 111 and a second top shell part 114 connected to the first top shell part 111. The second top shell part 114 extends obliquely from one end of the first top shell part 111 toward the bottom shell 12. The bottom shell 12 includes a first bottom shell part 121 and a second bottom shell part 122. The second bottom shell part 122 extends obliquely from one end of the first bottom shell part 121 toward the top shell 11.

In FIG. 3, the first field of view angle A and the first stitching region angle P1 of the first fisheye lens 40 are shown. Both the first field of view angle A and the first stitching region angle P1 of the first fisheye lens 40 are greater than 180° (e.g., in this implementation, the second field of view angle B is 200°, and the second stitching region angle P2 is 190°). The range covered by the first field of view angle A is the first field of view region 60. As shown in FIG. 3, the first field of view region 60 includes the area above lines L. However, those skilled in the art should understand in conjunction with FIG. 1 that the first field of view region 60 is essentially a partially spherical region located on the side of the mirror surface of the first fisheye lens 40 away from the bottom shell 12. The first stitching region is also a partially spherical region located on the side of the mirror surface of the first fisheye lens 40 away from the bottom shell 12 and is entirely within the range of the first field of view region 60. The first fisheye lens 40 protrudes from the first top shell part 111. Since the second top shell part 114 extends obliquely from one end of the first top shell part 111 toward the bottom shell 12, it prevents the top shell 11 from obstructing the first field of view region 60 of the first fisheye lens 40. Furthermore, the upper end of the central line of the first fisheye lens 40 is inclined toward the rear arm 20, further preventing the top shell 11 from obstructing the first field of view region 60 of the first fisheye lens 40. In one implementation, the angle C formed between the central line T1 of the first fisheye lens 40 and the vertical direction is less than 20°.

FIG. 3 also shows the second field of view angle B and the second stitching region angle P2 of the second fisheye lens 50. The second field of view angle B corresponds to the second field of view region 70, and the second stitching region angle P2 corresponds to the second stitching region. Both the second field of view angle B and the second stitching region angle P2 of the second fisheye lens 50 are greater than 180° (e.g., in this implementation, the second field of view angle B is 200°, and the second stitching region angle P2 is 190°). The range covered by the second field of view angle B is the second field of view region 70, and the range covered by the second stitching region angle P2 is the second stitching region. Similar to the first field of view region 60, the second field of view region 70 in FIG. 3 includes the area below lines M. However, those skilled in the art should understand in conjunction with FIG. 1 that the second field of view region 70 is essentially a partially spherical region located on the side of the mirror surface of the second fisheye lens 50 away from the top shell 11. The second stitching region is also a partially spherical region located on the side of the mirror surface of the second fisheye lens 50 away from the top shell 11 and is entirely within the range of the second field of view region 70. Since the first stitching region angle P1 and the second stitching region angle P2 are both greater than 180°, the first stitching region and the second stitching region intersect to form a stitching angle region 92. The region not covered by either the first stitching region or the second stitching region constitutes the aforementioned stitching blind area 90.

In one implementation of the present disclosure, the first field of view angle A and the first stitching region angle P1 of the first fisheye lens 40 are the same, and the second field of view angle B and the second stitching region angle P2 of the second fisheye lens 50 are the same. In this case, the field of view blind area 80 and the stitching blind area 90 are the same. In another implementation of the present disclosure, the first field of view angle A of the first fisheye lens 40 is greater than the first stitching region angle P1, and the second field of view angle B of the second fisheye lens 50 is greater than the second stitching region angle P2. In the unfolded mode, the rear arm 20 and the front arm 30 are located within the stitching blind area 90 of the first fisheye lens 40 and the second fisheye lens 50. Therefore, the panoramic image synthesized by the first fisheye lens 40 and the second fisheye lens 50 does not include other components of the panoramic UAV 100, such as the multiple arms, thereby achieving unobstructed panoramic shooting. It should be noted that due to the severe image distortion at the field of view boundaries of fisheye lenses, removing the stitching regions at the field of view boundaries and stitching them together results in better panoramic video effects. Additionally, the images in the stitching angle region 92 formed by the intersection of the first stitching region and the second stitching region will be removed and will not appear in the panoramic video formed after stitching.

It should be noted that in the implementations of the present disclosure, the field of view angles A and B and the stitching region angles P1 and P2 of the first fisheye lens 40 and the second fisheye lens 50 can all be the same, partially the same, or all different, and can be adjusted accordingly based on the structural configuration of the panoramic UAV 100.

The second fisheye lens 50 protrudes from the second bottom shell part 122. Since the second bottom shell part 122 extends obliquely from one end of the first bottom shell part 121 toward the top shell 11, it prevents the bottom shell 12 from obstructing the second field of view region 70 of the second fisheye lens 50. Furthermore, the upper end of the central line T2 of the second fisheye lens 50 is inclined toward the rear arm 20, further preventing the bottom shell 12 from obstructing the second field of view region 70 of the second fisheye lens 50. In one implementation, the angle D formed between the central line T2 of the second fisheye lens 50 and the vertical direction is less than 20°. In one implementation, the central line T2 of the second fisheye lens 50 coincides with the central line T1 of the first fisheye lens 40. This allows the second fisheye lens 50 and the first fisheye lens 40 to be almost symmetrically arranged on the body 10, thereby providing the panoramic UAV 100 with a better visual effect.

In one implementation, a supporting part 17 is provided on the bottom shell 12. The surface of the supporting part 17 away from the top shell 11 is a supporting surface 15 for contacting a landing surface 200. The second fisheye lens 50 is entirely located between the top shell 11 and the plane where the supporting surface 15 is located. Thus, when the panoramic UAV 100 lands, the second fisheye lens 50 is prevented from contacting the landing surface 200, thereby avoiding damage or scratches to the second fisheye lens 50 caused by the hard landing surface 200.

The rear arm 20 is arranged close to the bottom shell 12, and the front arm 30 is arranged in the middle portion of the side shell in the vertical direction and close to the first fisheye lens 40 in the horizontal direction. Thus, since the field of view blind area 80 between the first fisheye lens 40 and the second fisheye lens 50 narrows, arranging the front arm 30 in the middle portion of the side shell in the vertical direction and close to the first fisheye lens 40 in the horizontal direction prevents the front arm 30 from obstructing the first field of view region 60 and the second field of view region 70.

In one implementation, the rear arm 20 includes a left rear arm 24 and a right rear arm 25, which are respectively connected to the first side shell 13 and the second side shell 14. The front arm 30 includes a left front arm 34 and a right front arm 35, which are respectively connected to the first side shell 13 and the second side shell 14. The left front arm 34 and the right front arm 35 are closer to the first fisheye lens 40 in the vertical direction than the left rear arm 24 and the right rear arm 25.

The second driving component 33 of the left front arm 34 drives the second propeller 32 to rotate counterclockwise, and the second driving component 33 of the right front arm 35 drives the second propeller 32 to rotate clockwise. The first driving component 23 of the left rear arm 24 drives the first propeller 22 to rotate clockwise, and the first driving component 23 of the right rear arm 25 drives the first propeller 22 to rotate counterclockwise. The front arm 30 is arranged near the front of the UAV, and the rear arm 20 is arranged near the rear of the UAV. During flight of the panoramic UAV 100, lift is generated by the counterclockwise rotation of the left front second propeller 32, the clockwise rotation of the right front second propeller 32, the clockwise rotation of the left rear first propeller 22, and the counterclockwise rotation of the right rear first propeller 22, enabling the panoramic UAV 100 to take off and fly. Additionally, since the first propeller 22 and the second propeller 32 are both outwardly inclined, a component of the lift force in the anti-torque direction is obtained, thereby increasing the anti-torque force and improving the response speed during the operation of the first propeller 22 and the second propeller 32.

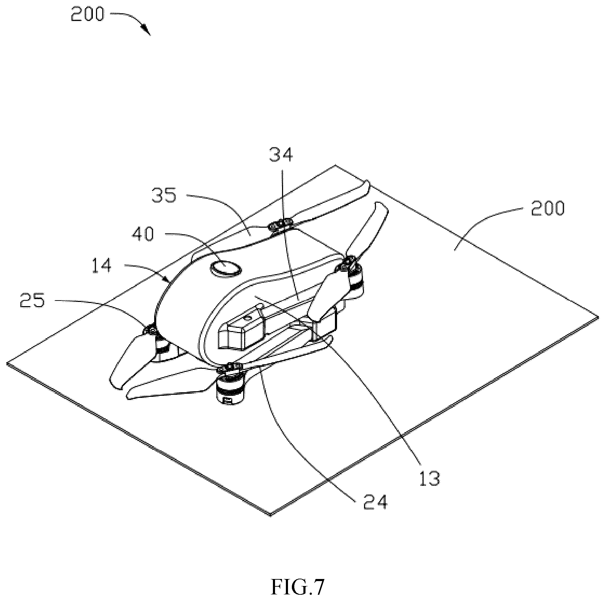

Please refer to FIGs. 1 and 7. In one implementation, the rear arm 20 and the front arm 30 include an unfolded mode and a folded mode. The rear arm 20 further includes a first rotating arm 26 rotatably connected to the side shell. The first driving component 23 is provided at the end of the first rotating arm 26. The front arm 30 further includes a second rotating arm 36 rotatably connected to the side shell. The second driving component 33 is provided at the end of the second rotating arm 36. When the panoramic UAV 100 transitions from the unfolded mode to the folded mode, the first rotating arm 26 and the second rotating arm 36 rotate toward each other and toward their respective side shells. In one implementation, the rear arm 20 includes the aforementioned left rear arm 24 and right rear arm 25, and the front arm 30 includes the aforementioned left front arm 34 and right front arm 35. The left front arm 34 and the left rear arm 24 rotate toward each other and toward the first side shell 13, and the right front arm 35 and the right rear arm 25 rotate toward each other and toward the second side shell 14.

Please refer to FIG. 3. In one implementation, the end of the first rotating arm 26 away from the top shell 11 is a grounding surface 21. In the unfolded mode, the grounding surface 21 is coplanar with the supporting surface 15. Thus, when the panoramic UAV 100 lands, the panoramic UAV 100 is supported by both the rear arm 20 and the supporting part 17, reducing the load on the supporting part 17 and helping to extend the lifespan of the panoramic UAV 100.

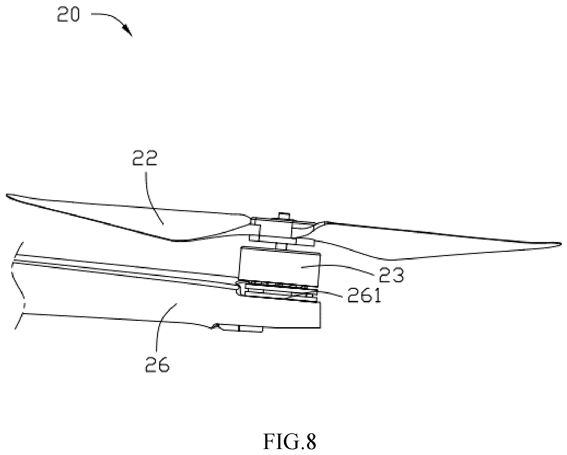

Please refer to FIGs. 3 and 8. In one implementation, the first rotating arm 26 includes an inclined surface 261 facing the first driving component 23. The first driving component 23 is securely arranged on the inclined surface 261. The plane in which the first propeller 22 is located is parallel to the inclined surface 261 and perpendicular to the axis 24 of the first driving component 23. The side of the first driving component 23 closer to the first fisheye lens 40 is higher than the side of the first driving component 23 further from the first fisheye lens 40. Thus, the first propeller 22 is arranged outwardly inclined. In one implementation, the first driving component 23 is a cylindrical motor. The structure of the front arm 30 may be the same as that of the rear arm 20 and will not be further described here. Please also refer to FIG. 5. The angle E formed between the axis 24 of the first driving component 23 and the vertical direction is 0° to 20°, and the angle F formed between the axis 34 of the second driving component 33 and the vertical direction is also 0° to 20°.

Although certain features and aspects of exemplary implementations have been described, those skilled in the art will recognize that many modifications are possible. For example, the methods and processes described in the present disclosure can be implemented using hardware components, software components, and/or any combination thereof. Furthermore, although various methods and processes have been described with reference to specific structural and/or functional components, the methods provided by the various implementations are not limited to any specific structural and/or functional architecture but can be implemented in any suitable hardware, firmware, and/or software configuration. Similarly, although certain functions have been attributed to certain system components, unless otherwise indicated by the context, the functions can be distributed among various other system components in several implementations.

Additionally, for convenience of description, although the methods and processes of the present disclosure have been described in a specific order, unless otherwise indicated by the context, the various processes can be reordered, added, and/or omitted according to various implementations. Moreover, the processes described for one method or process can be incorporated into other described methods or processes; however, the present disclosure is not limited to this. Likewise, the components described with respect to one system in a specific structural architecture can be organized alternatively and/or incorporated into other described systems. Therefore, although several exemplary implementations have been described above, it should be understood that the present disclosure is intended to cover all modifications and equivalents within the scope of the appended claims.

## Claims

1. A panoramic unmanned aerial vehicle (UAV), **characterized in that** the panoramic UAV comprises:
a body, comprising a top shell, a bottom shell, and a side shell connected between the top shell and the bottom shell;
a first fisheye lens, provided on the top shell, the first fisheye lens comprising a first field of view region and a first stitching region not exceeding a range of the first field of view region;
a second fisheye lens, provided on the bottom shell, the second fisheye lens comprising a second field of view region and a second stitching region not exceeding a range of the second field of view region, the second field of view region intersecting with the first field of view region to form an overlapping area and a field of view blind area, and a region not covered by either the first stitching region or the second stitching region forming a stitching blind area;
a rear arm, provided on the side shell, the rear arm comprising a first propeller and a first driving component configured to drive the first propeller to rotate; and
a front arm, provided on the side shell, the front arm comprising a second propeller and a second driving component configured to drive the second propeller to rotate,
the panoramic UAV being **characterized in that** both the rear arm and the front arm are located in the stitching blind area, and a plane passing through a central line of the first fisheye lens and perpendicular to a horizontal plane is defined as a reference plane, and a projection of an axis of the first driving component on the reference plane intersects with a projection of an axis of the second driving component on the reference plane below the bottom shell and between the first driving component and the second driving component.

2. The panoramic UAV according to claim 1, **characterized in that** an angle formed between the axis of the first driving component and a vertical direction is 0° to 20°, and an angle formed between the axis of the second driving component and the vertical direction is 0° to 20°.

3. The panoramic UAV according to claim 1, **characterized in that** the side shell comprises first and second side shells opposite to each other, the rear arm comprises a left rear arm and a right rear arm respectively connected to the first side shell and the second side shell, and the front arm comprises a left front arm and a right front arm respectively connected to the first side shell and the second side shell.

4. The panoramic UAV according to claim 3, **characterized in that** the second driving component of the left front arm drives the second propeller to rotate counterclockwise, the second driving component of the right front arm drives the second propeller to rotate clockwise, the first driving component of the left rear arm drives the first propeller to rotate clockwise, and the first driving component of the right rear arm drives the first propeller to rotate counterclockwise.

5. The panoramic UAV according to claim 3, **characterized in that** the side shell further comprises a first connecting shell and a second connecting shell, the first connecting shell and the second connecting shell connecting two ends of the first side shell and the second side shell, and the first fisheye lens is positioned close to the first connecting shell.

6. The panoramic UAV according to claim 1, **characterized in that** the top shell comprises a first top shell part and a second top shell part connected to the first top shell part, the first fisheye lens protrudes from the first top shell part, and the second top shell part extends obliquely from one end of the first top shell part towards the bottom shell.

7. The panoramic UAV according to claim 3, **characterized in that** in a vertical direction, the left front arm and the right front arm are closer to the first fisheye lens than the left rear arm and the right rear arm.

8. The panoramic UAV according to claim 1, **characterized in that** the rear arm comprises a first rotating arm rotatably connected to the side shell, the first driving component is provided at an end of the first rotating arm, the front arm comprises a second rotating arm rotatably connected to the side shell, the second driving component is provided at an end of the second rotating arm, and the first rotating arm and the second rotating arm rotate towards each other and towards their respective side shells.

9. The panoramic UAV according to claim 1, **characterized in that** the rear arm comprises a first rotating arm rotatably connected to the side shell, the first rotating arm comprises an inclined surface facing the first driving component, the first driving component is securely arranged on the inclined surface, a plane where the first propeller is located is parallel to the inclined surface and perpendicular to the axis of the first driving component, and a side of the first driving component closer to the first fisheye lens is higher than a side of the first driving component further from the first fisheye lens.

10. The panoramic UAV according to claim 1, **characterized in that** the bottom shell comprises a first bottom shell part and a second bottom shell part, the second bottom shell part extends obliquely from one end of the first bottom shell part towards the top shell, and the second fisheye lens protrudes from the second bottom shell part.

11. The panoramic UAV according to claim 1, **characterized in that** the bottom shell is provided with a supporting part, a surface of the supporting part away from the top shell is a supporting surface, and the second fisheye lens is located completely between the top shell and a plane where the supporting surface is located.

12. The panoramic UAV according to claim 11, **characterized in that** the front arm and the rear arm have an unfolded mode, a surface of the rear arm at an end away from the top shell is a grounding surface, and in the unfolded mode, the grounding surface is coplanar with the supporting surface of the supporting part.

13. The panoramic UAV according to claim 1, **characterized in that** upper ends of the central line of the first fisheye lens and a central line of the second fisheye lens are inclined towards the rear arm.

14. The panoramic UAV according to claim 13, **characterized in that** the central line of the first fisheye lens coincides with the central line of the second fisheye lens.

15. The panoramic UAV according to claim 13, **characterized in that** angles formed between the central line of the first fisheye lens and the vertical direction and between the central line of the second fisheye lens and the vertical direction are both less than 20°.

16. A panoramic UAV, **characterized in that** the panoramic UAV comprises:
a body, comprising a side shell, the side shell comprising first and second side shells opposite to each other;
a rear arm, comprising a left rear arm and a right rear arm respectively connected to the first side shell and the second side shell, each rear arm comprising a first propeller and a first driving component configured to drive the first propeller to rotate, the first driving component of the left rear arm driving the first propeller to rotate clockwise, and the first driving component of the right rear arm driving the first propeller to rotate counterclockwise; and
a front arm, comprising a left front arm and a right front arm respectively connected to the first side shell and the second side shell, each front arm comprising a second propeller and a second driving component configured to drive the second propeller to rotate, the second driving component of the left front arm driving the second propeller to rotate counterclockwise, and the second driving component of the right front arm driving the second propeller to rotate clockwise.

17. The panoramic UAV according to claim 16, **characterized in that** the body further comprises a top shell and a bottom shell, the side shell connects the top shell and the bottom shell, and the left front arm and the right front arm are closer to the top shell than the left rear arm and the right rear arm.

18. The panoramic UAV according to claim 16, **characterized in that**: the body further comprises a top shell and a bottom shell, and the side shell is connected between the top shell and the bottom shell;
the panoramic UAV further comprises a first fisheye lens provided on the top shell and a second fisheye lens provided on the bottom shell, the first fisheye lens comprises a first field of view region, and the second fisheye lens comprises a second field of view region;
the second field of view region intersects with the first field of view region to form an overlapping area and a field of view blind area, and both the rear arm and the front arm are located in the field of view blind area; and
a plane passing through a central line of the first fisheye lens and perpendicular to a horizontal plane is defined as a reference plane, and a projection of an axis of the first driving component on the reference plane intersects with a projection of an axis of the second driving component on the reference plane below the bottom shell and between the first driving component and the second driving component.

19. The panoramic UAV according to claim 18, **characterized in that** an angle formed between the axis of the first driving component and a vertical direction is 0° to 20°, and an angle formed between the axis of the second driving component and the vertical direction is 0° to 20°.

20. The panoramic UAV according to claim 18, **characterized in that**: the rear arm comprises a first rotating arm rotatably connected to the side shell, the first rotating arm comprises an inclined surface facing the first driving component, and the first driving component is securely arranged on the inclined surface;
a plane where the first propeller is located is parallel to the inclined surface and perpendicular to the axis of the first driving component; and
a side of the first driving component close to the second driving component is higher than a side of the first driving component away from the second driving component.
